# EUROPEAN PATENT APPLICATION

(11) **EP 4 797 124 A1**
(43) Date of publication of application: **26.08.2026**
(21) Application number: 24884721.2
(22) Date of filing: 29.10.2024
(51) Int. Cl.: G06F 16/9535, G06F 16/2457

(54) **DATA PROCESSING METHOD AND RELATED APPARATUS**

(30) Priority: 31.10.2023 CN 202311437873
(71) Applicant: Huawei Technologies Co., Ltd., Shenzhen, Guangdong 518129 (CN)
(72) Inventor: WU, Chuhan, Shenzhen, Guangdong 518129 (CN); JIA, Qinglin, Shenzhen, Guangdong 518129 (CN); ZONG, Libin, Shenzhen, Guangdong 518129 (CN); ZHANG, Muyu, Shenzhen, Guangdong 518129 (CN); DONG, Zhenhua, Shenzhen, Guangdong 518129 (CN); TANG, Ruiming, Shenzhen, Guangdong 518129 (CN)
(74) Representative: Epping - Hermann - Fischer
(86) International application number: PCT/CN2024/128067
(87) International publication number: WO 2025/092718

(57) **Abstract**

A data processing method is disclosed, and may be applied to the field of artificial intelligence. The method includes: obtaining first attribute information of a first user and a first item and at least one calibration feature, where the calibration feature indicates at least one of a recommendation scenario, an item, or an item provider; obtaining a calibration coefficient corresponding to each calibration feature; obtaining, based on the first attribute information by using a recommendation model, a first recommendation score of recommending the first item to the first user; and adjusting the first recommendation score based on the calibration coefficient. In this application, corresponding calibration coefficients are set for different calibration dimensions, and output of a model is adjusted by using a calibration coefficient of a calibration dimension related to currently to-be-recommended data, so that recommendation effect and precision of the model can be improved.

## Description

This application claims priority to Chinese Patent Application No. 202311437873.4, filed with the China National Intellectual Property Administration on October 31, 2023 and entitled "DATA PROCESSING METHOD AND RELATED APPARATUS", which is incorporated herein by reference in its entirety.

### TECHNICAL FIELD

This application relates to the field of artificial intelligence, and in particular, to a data processing method and a related apparatus.

### BACKGROUND

Artificial intelligence (artificial intelligence, AI) is a theory, a method, a technology, and an application system in which human intelligence is simulated, extended, and expanded by using a digital computer or a machine controlled by a digital computer, to perceive an environment, obtain knowledge, and achieve an optimal result by using the knowledge. In other words, artificial intelligence is a branch of computer science and is intended to understand the essence of intelligence and produce a new intelligent machine that can react in a way similar to human intelligence. Artificial intelligence is to study design principles and implementation methods of various intelligent machines, so that the machines have perception, inference, and decision-making functions.

In a recommendation model, it is critical to accurately estimate user behavior. For example, in click-through rate (click-through rate, CTR) estimation of advertisements, the model needs to accurately estimate a probability that a user clicks an advertisement, news, or the like, to guide a platform to perform personalized ranking based on the user's interest. In a typical online advertisement recommendation system, a score estimated by the model affects a ranking and bidding mechanism. Ideally, distribution of scores estimated by the recommendation model needs to be consistent with a probability of occurrence of actual feedbacks. For example, if an average click-through rate estimated by the model is 5%, it is expected that 5% of advertisement impressions are clicked. However, in an actual case, the score estimated by the model is different from an actual observation value of online data. This may be caused by an intrinsic bias of the model or a change of data distribution. Overestimation or underestimation of a model score may cause a waste of advertisement impression opportunities and a problem of cost overruns for advertisers, and even lead to an online operation accident. Therefore, a model calibration method is usually used to perform post-processing on the score estimated by the model, so that the distribution of scores estimated by the recommendation model fits the probability of occurrence of the actual feedbacks.

In an existing technology, post-processing correction is performed on a prediction result of the recommendation model based on recent logs collected online, so that distribution of probabilities estimated by the model fits actual user feedbacks. However, in an existing method, a global output result of the model is calibrated by using a calibration coefficient, resulting in poor calibration effect.

### SUMMARY

According to a first aspect, this application provides a data processing method. The method includes: obtaining first attribute information of a first user and a first item and at least one calibration feature, where the calibration feature indicates at least one of a recommendation scenario, an item, or an item provider; obtaining a calibration coefficient corresponding to each calibration feature; obtaining, based on the first attribute information by using a recommendation model, a first recommendation score of recommending the first item to the first user; and adjusting the first recommendation score based on the calibration coefficient.

A calibration feature is a feature that affects a recommendation score. For example, the calibration feature may be an ID of an item, a recommended layout, an ID of an item provider (for example, an advertiser), a recommendation platform, a recommendation scenario, or the like. The recommendation scenario may be related to a context (for example, information such as time and a region). Different calibration features cause different data distribution, thereby affecting the recommendation score and a recommendation result.

In embodiments of this application, corresponding calibration coefficients are set for different calibration dimensions, and output of a model is adjusted by using a calibration coefficient of a calibration dimension related to currently to-be-recommended data, so that recommendation effect and precision of the model can be improved.

In a possible implementation, the method further includes:
obtaining a second recommendation score of recommending the second item to the second user and an actual interaction score of the second user with the second item, where the second recommendation score is obtained by using the recommendation model, the second attribute information corresponds to a target calibration feature, and the target calibration feature is one of the at least one calibration feature; and calculating a first deviation degree between the actual interaction score and the second recommendation score by using a calculation method of a confidence interval for binomial distribution, where a calibration coefficient corresponding to the target calibration feature is generated based on the first deviation degree.

A confidence of a positive sample proportion (namely, a calibration coefficient) is calculated by using the confidence interval for binomial distribution, and the model is calibrated with different strength based on the confidence. Even if a confidence of accumulated data in a short time window is used, good calibration effect can be obtained.

In a possible implementation, the method further includes: mapping the first deviation degree by using a target mapping method, to obtain a second deviation degree, where the target mapping method is a monotonically increasing function; and calculating, by using the calculation method of the confidence interval for binomial distribution, a third recommendation score obtained after the actual interaction score is deviated by the second deviation degree; and
obtaining, based on a difference between the third recommendation score and the second recommendation score, the calibration coefficient corresponding to the target calibration feature.

In a possible implementation, obtaining, based on the difference between the third recommendation score and the second recommendation score, the calibration coefficient corresponding to the target calibration feature includes: using a ratio of the third recommendation score to the second recommendation score as the calibration coefficient corresponding to the target calibration feature.

In a possible implementation, the confidence interval is a Wilson interval.

In a possible implementation, the first attribute information corresponds to a plurality of calibration features, and adjusting the first recommendation score based on the calibration coefficient includes: fusing a plurality of calibration coefficients corresponding to the plurality of calibration features, to obtain a fused calibration coefficient; and adjusting the first recommendation score based on the fused calibration coefficient.

According to a second aspect, this application provides a data processing apparatus. The apparatus includes:
an obtaining module, configured to: obtain first attribute information of a first user and a first item and at least one calibration feature, where the calibration feature indicates at least one of a recommendation scenario, an item, or an item provider; and
obtain a calibration coefficient corresponding to each calibration feature; and
a processing module, configured to: obtain, based on the first attribute information by using a recommendation model, a first recommendation score of recommending the first item to the first user; and
adjust the first recommendation score based on the calibration coefficient.

In a possible implementation, the obtaining module is further configured to:
obtain a second recommendation score of recommending the second item to the second user and an actual interaction score of the second user with the second item, where the second recommendation score is obtained by using the recommendation model, the second attribute information corresponds to a target calibration feature, and the target calibration feature is one of the at least one calibration feature; and
the processing module is further configured to:
   calculate a first deviation degree between the actual interaction score and the second recommendation score by using a calculation method of a confidence interval for binomial distribution, where a calibration coefficient corresponding to the target calibration feature is generated based on the first deviation degree.

In a possible implementation, the processing module is further configured to:
map the first deviation degree by using a target mapping apparatus, to obtain a second deviation degree, where the target mapping apparatus is a monotonically increasing function;
calculate, by using the calculation apparatus of the confidence interval for binomial distribution, a third recommendation score obtained after the actual interaction score is deviated by the second deviation degree; and
obtain, based on a difference between the third recommendation score and the second recommendation score, the calibration coefficient corresponding to the target calibration feature.

In a possible implementation, the processing module is specifically configured to:
use a ratio of the third recommendation score to the second recommendation score as the calibration coefficient corresponding to the target calibration feature.

In a possible implementation, the confidence interval is a Wilson interval.

In a possible implementation, the processing module is specifically configured to:
fuse a plurality of calibration coefficients corresponding to the plurality of calibration features, to obtain a fused calibration coefficient; and
adjust the first recommendation score based on the fused calibration coefficient.

According to a third aspect, an embodiment of this application provides a data processing apparatus. The apparatus may include a memory, a processor, and a bus system. The memory is configured to store a program, and the processor is configured to execute the program in the memory, to perform the method according to any optional method of the first aspect.

According to a fourth aspect, an embodiment of this application provides a computer-readable storage medium. The computer-readable storage medium stores a computer program. When the computer program is run on a computer, the computer is enabled to perform the method according to any optional method of the first aspect.

According to a fifth aspect, an embodiment of this application provides a computer program product, including code. When the code is executed, any optional method of the first aspect is implemented.

According to a sixth aspect, this application provides a chip system. The chip system includes a processor, configured to support a data processing apparatus in implementing functions in the foregoing aspects, for example, sending or processing data or information in the foregoing method. In a possible design, the chip system further includes a memory. The memory is configured to store program instructions and data that are necessary for an execution device or a training device. The chip system may include a chip, or may include a chip and another discrete component.

### BRIEF DESCRIPTION OF DRAWINGS

FIG. 1 is a diagram of a structure of an artificial intelligence main framework;
FIG. 2 is a diagram of a system architecture according to an embodiment of this application;
FIG. 3 is a diagram of a system architecture according to an embodiment of this application;
FIG. 4 is a diagram of a recommendation scenario according to an embodiment of this application;
FIG. 5 is a schematic flowchart of a data processing method according to an embodiment of this application;
FIG. 6 is a diagram of an application architecture;
FIG. 7 is a diagram of a structure of a data processing apparatus according to an embodiment of this application;
FIG. 8 is a diagram of an execution device according to an embodiment of this application;
FIG. 9 is a diagram of a training device according to an embodiment of this application; and
FIG. 10 is a diagram of a chip according to an embodiment of this application.

### DESCRIPTION OF EMBODIMENTS

The following describes embodiments of the present invention with reference to the accompanying drawings in embodiments of the present invention. Terms used in embodiments of the present invention are merely intended to explain specific embodiments of the present invention, and are not intended to limit the present invention.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the terms used in such a way are interchangeable in appropriate circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

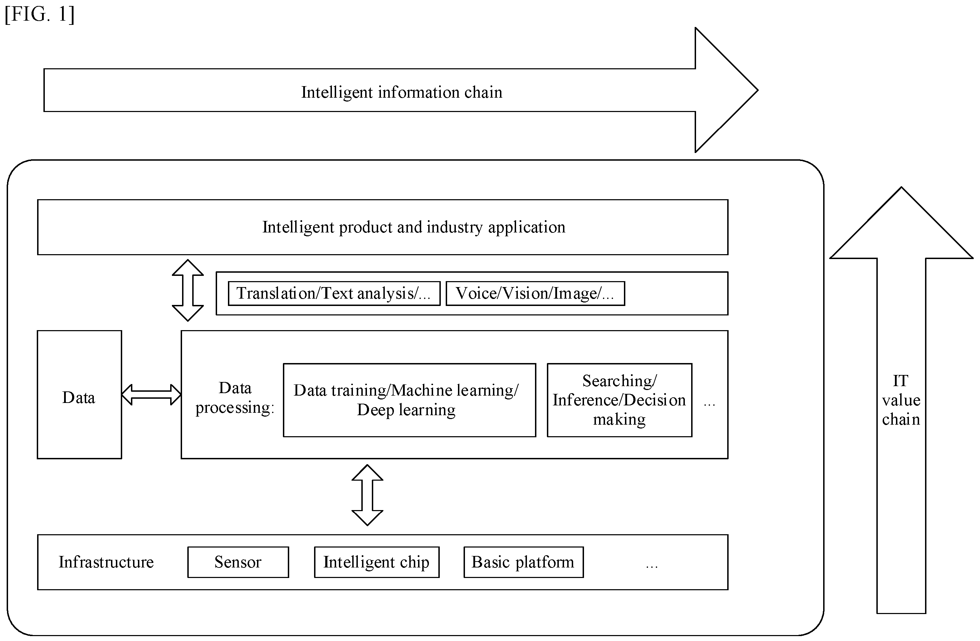

An overall working procedure of an artificial intelligence system is first described. FIG. 1 is a diagram of a structure of an artificial intelligence main framework. The following describes the artificial intelligence main framework from two dimensions: an "intelligent information chain" (a horizontal axis) and an "IT value chain" (a vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of artificial intelligence to an industrial ecological process of a system.

### (1) Infrastructure

The infrastructure provides computing capability support for the artificial intelligence system, implements communication with the external world, and implements support by using a basic platform. A sensor is used to communicate with the outside. A computing capability is provided by an intelligent chip (a hardware acceleration chip like a CPU, an NPU, a GPU, an ASIC, or an FPGA). The basic platform includes related platforms such as a distributed computing framework and a network for assurance and support, and may include cloud storage and computing, an interconnection network, and the like. For example, the sensor communicates with the outside to obtain data, and the data is provided for an intelligent chip in a distributed computing system provided by the basic platform for computing.

### (2) Data

Data at an upper layer of the infrastructure indicates a data source in the artificial intelligence field. The data relates to a graph, an image, a speech, and a text, further relates to Internet of Things data of a conventional device, and includes service data of an existing system and perception data such as force, displacement, a liquid level, a temperature, and humidity.

### (3) Data processing

Data processing usually includes data training, machine learning, deep learning, searching, inference, decision-making, and the like.

Machine learning and deep learning may mean performing symbolic and formal intelligent information modeling, extraction, preprocessing, training, and the like on data.

Inference is a process in which human intelligent inference is simulated in a computer or an intelligent system, and machine thinking and problem resolving are performed by using formal information according to an inference control policy. A typical function is searching and matching.

Decision-making is a process of making a decision after intelligent information is inferred, and usually provides functions such as classification, ranking, and prediction.

### (4) General capability

After the foregoing data processing is performed on data, some general capabilities may be further formed based on a data processing result. For example, the general capability may be an algorithm or a general system, for example, translation, text analysis, computer vision processing, speech recognition, and image recognition.

### (5) Intelligent product and industry application

The intelligent product and industry application are products and applications of the artificial intelligence system in various fields. The intelligent product and industry application involve packaging overall artificial intelligence solutions, to productize and apply intelligent information decision-making. Application fields of the intelligent product and industry application mainly include intelligent terminals, intelligent transportation, intelligent health care, autonomous driving, smart cities, and the like.

Embodiments of this application may be applied to the information recommendation field. The scenario includes but is not limited to scenarios related to e-commerce product recommendation, search engine result recommendation, application market recommendation, music recommendation, and video recommendation. A recommended item in different application scenarios may also be referred to as an "object" for ease of subsequent description. To be specific, in different recommendation scenarios, the recommended object may be an app, a video, music, or a commodity (for example, a presentation interface of an online shopping platform displays different commodities based on different users, which may also be presented based on a recommendation result of a recommendation model in essence). These recommendation scenarios usually collect a user behavior log, perform log data preprocessing (for example, quantization and sampling), train a sample set to obtain a recommendation model, and analyze and process, based on the recommendation model, an object (for example, an app or music) in a scenario corresponding to sample training. For example, if a sample selected in a training phase of the recommendation model is from operation behavior performed by a user on a recommended app in an application market on a mobile phone, the recommendation model obtained through training is applicable to the app application market on the mobile phone, or may be used in an app application market on another type of terminal to recommend an app on the terminal. The recommendation model finally calculates a recommendation probability or a score of each to-be-recommended object. The recommendation system selects a recommendation result according to a specific selection rule, for example, performs ranking based on the recommendation probability or the score, and presents the recommendation result to the user by using a corresponding application or terminal device, and the user performs an operation on an object in the recommendation result to generate a user behavior log and the like.

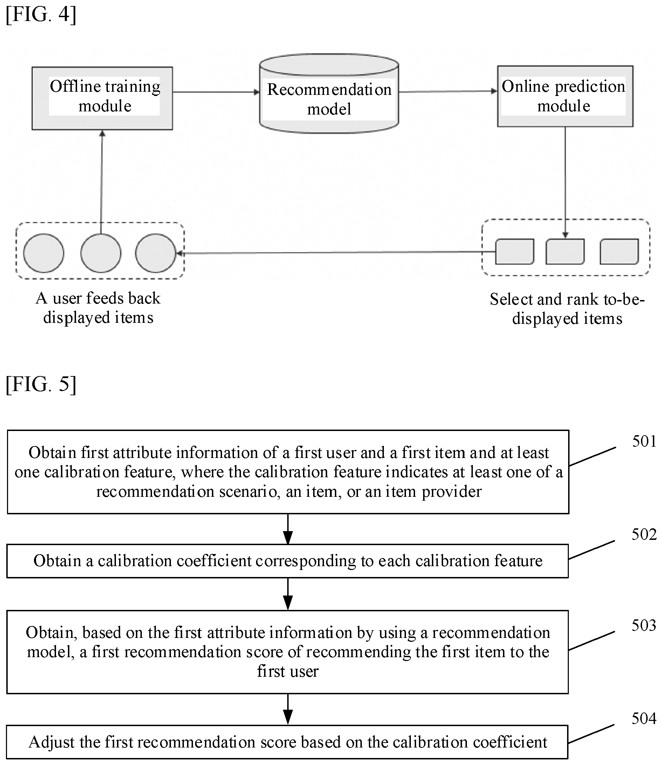

Refer to FIG. 4. In a recommendation process, when a user interacts with a recommendation system, a recommendation request is triggered. The recommendation system inputs the request and related feature information into a deployed recommendation model, and then predicts click-through rates of the user for all candidate objects. Then, the candidate objects are ranked in descending order of the predicted click-through rates, and the candidate objects are sequentially displayed at different locations as recommendation results for the user. The user browses displayed items and performs user behavior, such as browsing, clicking, and downloading. The user behavior is stored in a log as training data. An offline training module irregularly updates a parameter of the recommendation model to improve recommendation effect of the model.

For example, when the user starts an application market on a mobile phone, a recommendation module of the application market may be triggered. The recommendation module of the application market predicts probabilities that the user downloads given candidate applications, based on a historical download record of the user, a clicking record of the user, features of the applications, and environment feature information such as time and a location. The application market displays the applications in descending order of the probabilities based on a prediction result, to increase download probabilities of the applications. Specifically, an application that is more likely to be downloaded is arranged in the front rank, and an application that is less likely to be downloaded is arranged in the rear rank. The user behavior is also stored in a log, and an offline training module trains and updates a parameter of a prediction model.

For another example, in an application related to a life-long companion, a cognitive brain may be constructed by simulating a mechanism of a human brain, based on historical data of the user in domains such as video, music, and news, and by using various models and algorithms, thereby establishing a life-long learning system framework for the user. The life-long companion may record a past event of the user based on system data, application data, and the like, understand a current intent of the user, predict a future action or future behavior of the user, and finally implement an intelligent service. At a current first stage, user behavior data (including information such as a device-side SMS message, a photo, and an email event) is obtained from a music app, a video app, a browser app, and the like to construct a user profile system, and to construct an individual knowledge graph of the user based on a learning and memory module for user information filtering, association analysis, cross-domain recommendation, causal inference, and the like.

The following describes an application architecture in embodiments of this application.

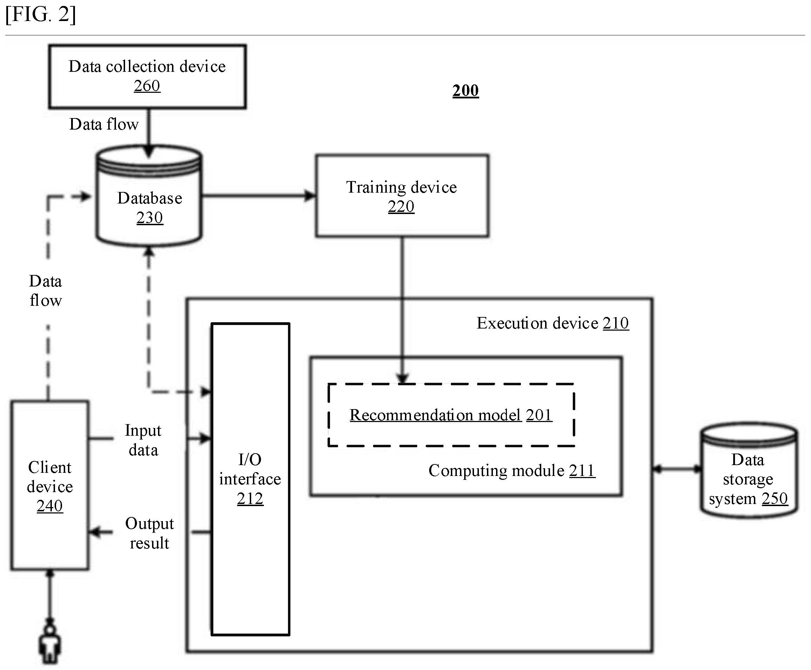

Refer to FIG. 2. An embodiment of the present invention provides a recommendation system architecture 200. A data collection device 260 is configured to collect a sample. One training sample may include a plurality of pieces of feature information (or described as attribute information, for example, a user attribute and an item attribute). There may be a plurality of types of feature information. The feature information may specifically include user feature information, object feature information, and a label feature. The user feature information represents a feature of a user, for example, a gender, an age, an occupation, or a hobby. The object feature information represents a feature of an object pushed to the user. Different recommendation systems correspond to different objects, and types of features that need to be extracted for different objects are also different. For example, an object feature extracted from a training sample of an app market may be a name (an identifier), a type, a size, or the like of an app. An object feature extracted from a training sample of an e-commerce app may be a name, a category, a price range, or the like of a commodity. The label feature indicates whether the sample is a positive sample or a negative sample. Generally, a label feature of a sample may be obtained based on operation information of the user for a recommended object. A sample in which the user performs an operation on the recommended object is a positive sample, and a sample in which the user does not perform an operation on the recommended object is a negative sample. For example, when the user clicks, downloads, or purchases the recommended object, the label feature is 1, indicating that the sample is a positive sample, and if the user does not perform any operation on the recommended object, the label feature is 0, indicating that the sample is a negative sample. The sample may be stored in a database 230 after being collected. A part or all of feature information, for example, user feature information, information (used to determine a type identifier) about an operation performed by the user on an object, and object feature information (for example, an object identifier), in the sample in the database 230 may be directly obtained from a client device 240. A training device 220 obtains a model parameter matrix through sample training in the database 230, to generate a recommendation model 201 (for example, the feature extraction network and the neural network in embodiments of this application). The following describes in more detail how the training device 220 performs training to obtain the model parameter matrix used to generate the recommendation model 201. The recommendation model 201 can be used to evaluate a large quantity of objects to obtain a score of each to-be-recommended object. Further, a specified quantity of objects or a preset quantity of objects may be recommended from evaluation results of the large quantity of objects. A computing module 211 obtains a recommendation result based on the evaluation result of the recommendation model 201, and recommends the recommendation result to the client device through an I/O interface 212.

In this embodiment of this application, the training device 220 may select positive and negative samples from a sample set in the database 230, add the positive and negative samples to a training set, and then perform training based on the samples in the training set by using a recommendation model, to obtain a trained recommendation model. For implementation details of the computing module 211, refer to detailed descriptions of a method embodiment shown in FIG. 5.

After obtaining the model parameter matrix through sample training to construct the recommendation model 201, the training device 220 sends the recommendation model 201 to an execution device 210, or directly sends the model parameter matrix to the execution device 210. The recommendation model is constructed in the execution device 210, for recommending a corresponding system. For example, a recommendation model obtained through training based on a video-related sample may be used to recommend a video to a user on a video website or an app, and a recommendation model obtained through training based on an app-related sample may be used to recommend an app to the user in an application market.

The execution device 210 is provided with the I/O interface 212, to exchange data with an external device. The execution device 210 may obtain user feature information such as a user identifier, a user identity, a gender, an occupation, and a hobby from the client device 240 through the I/O interface 212. The information may alternatively be obtained from a system database. The recommendation model 201 recommends a target recommended object to the user based on feature information of a to-be-recommended object and the user feature information. The execution device 210 may be disposed in a cloud server, or may be disposed in a user client.

The execution device 210 may invoke data, code, and the like in a data storage system 250, and may store output data in the data storage system 250. The data storage system 250 may be disposed in the execution device 210, or may be independently disposed, or may be disposed in another network entity. There may be one or more data storage systems 250.

The computing module 211 processes the user feature information and the feature information of the to-be-recommended object by using the recommendation model 201. For example, the computing module 211 analyzes and processes the user feature information and the feature information of the to-be-recommended object by using the recommendation model 201, to obtain a score of the to-be-recommended object. The to-be-recommended object is ranked based on the score. An object in the front rank is used as an object recommended to the client device 240.

Finally, the I/O interface 212 returns the recommendation result to the client device 240, and presents the recommendation result to the user.

Furthermore, the training device 220 may generate corresponding recommendation models 201 for different targets based on different sample feature information, to provide a better result for the user.

It should be noted that FIG. 2 is merely a diagram of a system architecture according to an embodiment of the present invention. A position relationship between devices, components, modules, and the like in the figure does not constitute any limitation. For example, in FIG. 2, the data storage system 250 is an external memory relative to the execution device 210, and in another case, the data storage system 250 may alternatively be disposed in the execution device 210.

In this embodiment of this application, the training device 220, the execution device 210, and the client device 240 may be three different physical devices, or the training device 220 and the execution device 210 may be on a same physical device or one cluster, or the execution device 210 and the client device 240 may be on a same physical device or one cluster.

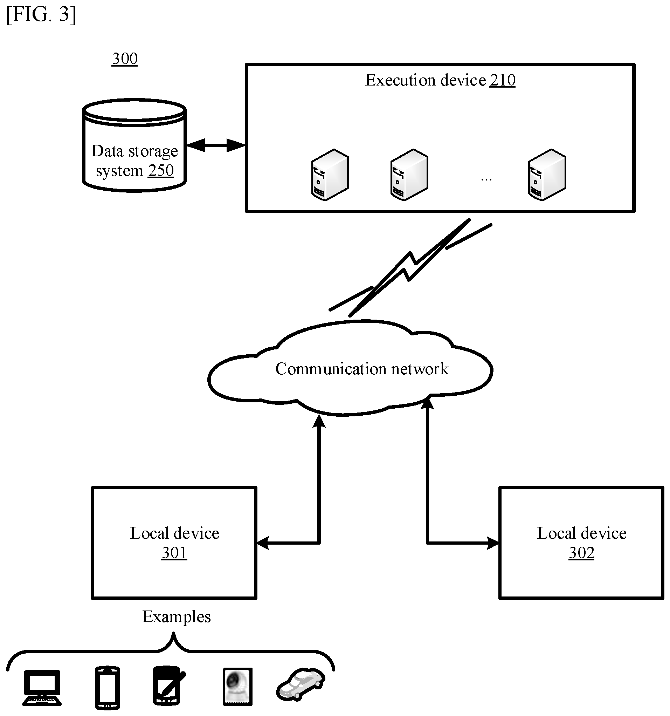

FIG. 3 shows a system architecture 300 according to an embodiment of the present invention. In this architecture, the execution device 210 is implemented by one or more servers. Optionally, the execution device 210 cooperates with another compute device, for example, a device such as a data storage device, a router, or a load balancer. The execution device 210 may be disposed on one physical site, or distributed on a plurality of physical sites. The execution device 210 may use data in a data storage system 250 or invoke program code in a data storage system 250 to implement an object recommendation function. Specifically, information about to-be-recommended objects is input into a recommendation model, and the recommendation model generates an estimated score for each to-be-recommended object, then ranks the to-be-recommended objects in descending order of the estimated scores, and recommends a to-be-recommended object to a user based on a ranking result. For example, top 10 objects in the ranking result are recommended to the user.

The data storage system 250 is configured to receive and store a parameter that is of the recommendation model and that is sent by a training device, is configured to store data of a recommendation result obtained by using the recommendation model, and certainly may further include program code (or an instruction) required for normal running of the data storage system 250. The data storage system 250 may be one device deployed outside the execution device 210 or a distributed storage cluster including a plurality of devices deployed outside the execution device 210. In this case, when the execution device 210 needs to use the data in the storage system 250, the storage system 250 may send the data required by the execution device to the execution device 210. Correspondingly, the execution device 210 receives and stores (or buffers) the data. Certainly, the data storage system 250 may be alternatively deployed in the execution device 210. When the data storage system 250 is deployed in the execution device 210, the distributed storage system may include one or more memories. Optionally, when there are a plurality of memories, different memories are configured to store different types of data. For example, the model parameter of the recommendation model generated by the training device and the data of the recommendation result obtained by using the recommendation model may be respectively stored in two different memories.

Users may operate their user devices (for example, a local device 301 and a local device 302) to interact with the execution device 210. Each local device may represent any compute device, for example, a personal computer, a computer workstation, a smartphone, a tablet computer, a smart camera, a smart automobile, another type of cellular phone, a media consumption device, a wearable device, a set-top box, or a game console.

A local device of each user may interact with the execution device 210 through a communication network compliant with any communication mechanism/communication standard. The communication network may be a wide area network, a local area network, a point-to-point connection, or any combination thereof.

In another implementation, the execution device 210 may be implemented by the local device. For example, the local device 301 may implement a recommendation function of the execution device 210 based on a recommendation model by obtaining user feature information and feeding back a recommendation result to the user, or provide a service for the user of the local device 302.

Embodiments of this application relate to massive application of a neural network. For ease of understanding, the following first describes terms and concepts related to the neural network in embodiments of this application.

### 1. Click-through rate (click-through rate, CTR)

The click-through rate may also be referred to as a click rate, and is a ratio of a quantity of times that recommendation information (for example, a recommended item) on a website or an application is clicked to a quantity of times of exposure of the recommendation information. The click-through rate is usually an important indicator for measuring a recommendation system in recommendation systems.

### 2. Personalized recommendation system

The personalized recommendation system is a system that performs analysis by using a machine learning algorithm based on historical data of a user (for example, operation information in embodiments of this application), predicts a new request based on the analysis, and provides a personalized recommendation result.

### 3. Offline training (offline training)

The offline training is a module, in a personalized recommendation system, that iteratively updates parameters of a recommendation model by using a machine learning algorithm based on historical data of a user (for example, operation information in embodiments of this application) until a specified requirement is met.

### 4. Online inference (online inference)

The online inference is to predict, based on a model obtained through offline training, preference of a user for a recommended item in a current context environment based on features of the user, the item, and context, and predict probability that the user selects the recommended item.

For example, FIG. 4 is a diagram of a recommendation system according to an embodiment of this application. As shown in FIG. 4, when a user enters a system, a recommendation request is triggered. The recommendation system inputs the request and related information (for example, operation information in embodiments of this application) of the request into the recommendation model, and then predicts a selection rate of the user for an item in the system. Further, items are ranked in descending order based on predicted selection rates or based on a function of the selection rates. That is, the recommendation system may sequentially display the items at different locations as a recommendation result for the user. The user browses the items at different locations, and performs user behavior such as browsing, selecting, and downloading. In addition, actual behavior of the user is stored in a log as training data. An offline training module continuously updates a parameter of the recommendation model to improve prediction effect of the model.

For example, when the user starts an application market on a smart terminal (for example, a mobile phone), a recommendation system in the application market may be triggered. The recommendation system in the application market predicts probabilities that the user downloads candidate recommended apps, based on a historical behavior log of the user, for example, a historical download record of the user, a user selection record, and a feature of the application market, for example, environment feature information such as time and a location. Based on a calculated result, the recommendation system of the application market may present the candidate apps in descending order of values of the predicted probabilities, to improve a download probability of the candidate app.

For example, an app with a high predicted user selection rate may be presented at a front recommendation location, and an app with a low predicted user selection rate may be presented in a back recommendation location.

The recommendation model may be a neural network model. The following describes related terms and concepts of a neural network that may be used in embodiments of this application.

### (1) Neural network

The neural network may include a neuron. The neuron may be an operation unit that uses xs (namely, input data) and an intercept of 1 as input. Output of the operation unit may be as follows: ${h}_{W , b} \left(x\right) = f \left({W}^{T}x\right) = f \left({\sum }_{s = 1}^{n} {W}_{s} {x}_{s} + b\right)$

Herein, s=1, 2, ..., and n, n is a natural number greater than 1, Ws is a weight of xs, b is a bias of the neuron, and f is an activation function (activation function) of the neuron, and is used to introduce a non-linear characteristic into the neural network, to convert an input signal in the neuron into an output signal. The output signal of the activation function may be used as input of a next convolutional layer, and the activation function may be a sigmoid function. The neural network is a network formed by joining a plurality of single neurons together. To be specific, output of a neuron may be input of another neuron. Input of each neuron may be connected to a local receptive field of a previous layer to extract a feature of the local receptive field. The local receptive field may be a region including several neurons.

### (2) Deep neural network

The deep neural network (Deep Neural Network, DNN), also referred to as a multilayer neural network, may be understood as a neural network having many hidden layers. The "many" herein does not have a special measurement standard. The DNN is divided based on locations of different layers, and a neural network in the DNN may be divided into three types: an input layer, a hidden layer, and an output layer. Generally, the first layer is the input layer, the last layer is the output layer, and the middle layer is the hidden layer. Layers are fully connected. To be specific, any neuron at an i^{th} layer is necessarily connected to any neuron at an (i+1)^{th} layer. Although the DNN seems to be complex, the DNN is actually not complex in terms of work at each layer, and is simply expressed as the following linear relationship expression: y̅ = α(Wx̅ + b̅), where x̅ is an input vector, y̅ is an output vector, b̅ is a bias vector, W is a weight matrix (also referred to as a coefficient), and α() is an activation function. At each layer, the output vector y̅ is obtained by performing such a simple operation on the input vector x̅. Because the DNN includes a large quantity of layers, there are a large quantity of coefficients W and a large quantity of bias vectors b̅. These parameters are defined in the DNN as follows: The coefficient W is used as an example. It is assumed that in a three-layer DNN, a linear coefficient from a fourth neuron at a second layer to a second neuron at a third layer is defined as ${w}_{24}^{3}$. The superscript 3 represents a layer at which the coefficient W is located, and the subscript corresponds to an output thirdlayer index 2 and an input second-layer index 4. In conclusion, a coefficient from a k^{th} neuron at an (L-1)^{th} layer to a j^{th} neuron at an L^{th} layer is defined as ${W}_{jk}^{L}$. It should be noted that the input layer has no parameter W. In the deep neural network, more hidden layers make the network more capable of describing a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix of all layers of the trained deep neural network (a weight matrix formed by vectors W at many layers).

### (3) Loss function

In a process of training a deep neural network, because it is expected that output of the deep neural network is as much as possible close to a predicted value that is actually expected, a predicted value of a current network and a target value that is actually expected may be compared, and then a weight vector of each layer of the neural network is updated based on a difference between the predicted value and the target value (certainly, there is usually an initialization process before the first update, to be specific, parameters are preconfigured for all layers of the deep neural network). For example, if the predicted value of the network is large, the weight vector is adjusted to decrease the predicted value, and adjustment is continuously performed, until the deep neural network can predict the target value that is actually expected or a value that is very close to the target value that is actually expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the deep neural network is a process of minimizing the loss as much as possible.

### (4) Back propagation algorithm

An error back propagation (back propagation, BP) algorithm may be used to correct a value of a parameter in an initial model in a training process, so that an error loss of the model becomes smaller. Specifically, an input signal is transferred forward until an error loss occurs at output, and the parameter in the initial model is updated based on back propagation error loss information, to make the error loss converge. The back propagation algorithm is an error-loss-centered back propagation motion intended to obtain a parameter, such as a weight matrix, of an optimal model.

### (5) Machine learning system

Parameters of a machine learning model are trained based on input data and labels and by using an optimization method such as gradient descent, and a model obtained through training is used to predict unknown data.

### (6) Personalized recommendation system

The personalized recommendation system is a system that performs analysis and modeling based on historical data of a user and by using a machine learning algorithm, predicts a new user request based on the analysis, and provides a personalized recommendation result.

### (7) Model calibration: Output of a model is mapped to make score distribution of the output of the model as close as possible to distribution of an actual label.

In a recommendation model, it is critical to accurately estimate user behavior. For example, in click-through rate (click-through rate, CTR) estimation of advertisements, the model needs to accurately estimate a probability that a user clicks an advertisement, news, or the like, to guide a platform to perform personalized ranking based on the user's interest. In a typical online advertisement recommendation system, a score estimated by the model affects a ranking and bidding mechanism. Ideally, distribution of scores estimated by the recommendation model needs to be consistent with a probability of occurrence of actual feedbacks. For example, if an average click-through rate estimated by the model is 5%, it is expected that 5% of advertisement impressions are clicked. However, in an actual case, the score estimated by the model is different from an actual observation value of online data. This may be caused by an intrinsic bias of the model or a change of data distribution. Overestimation or underestimation of a model score may cause a waste of advertisement impression opportunities and a problem of cost overruns for advertisers, and even lead to an online operation accident. Therefore, a model calibration method is usually used to perform post-processing on the score estimated by the model, so that the distribution of scores estimated by the recommendation model fits the probability of occurrence of the actual feedbacks.

In an existing technology, post-processing correction is performed on a prediction result of the recommendation model based on recent logs collected online, so that distribution of probabilities estimated by the model fits actual user feedbacks. However, in an existing method, a global output result of the model is calibrated by using a calibration coefficient, resulting in poor calibration effect.

To resolve the foregoing problems, this application provides a data processing method.

FIG. 5 is a diagram of an embodiment of a data processing method according to an embodiment of this application. As shown in FIG. 5, the data processing method provided in this embodiment of this application includes the following steps.

501: Obtain first attribute information of a first user and a first item and at least one calibration feature, where the calibration feature indicates at least one of a recommendation scenario, an item, or an item provider.

In this embodiment of this application, an entity for performing step 501 may be a terminal device, and the terminal device may be a portable mobile device, for example, but not limited to a mobile or portable compute device (for example, a smartphone), a personal computer, a server computer, a handheld device (for example, a tablet computer) or a laptop device, a multiprocessor system, a game console or controller, a microprocessor-based system, a set-top box, a programmable consumer electronic product, a mobile phone, a mobile compute and/or communication device having a wearable or accessory form factor (for example, a watch, glasses, a headset, or an earbud), a network PC, a minicomputer, a mainframe computer, or a distributed computing environment including any of the foregoing systems or devices.

In this embodiment of this application, step 501 may be performed by a server on a cloud side. The server may receive operation data of a user sent by a terminal device, and then the server may obtain the operation data of the user.

In a possible implementation, when an item is recommended to the user, a recommendation score of recommending each item to the user needs to be calculated. In this embodiment of this application, an example in which a recommendation score of recommending the first item to the first user is calculated is used for description.

In a possible implementation, attribute information of the first user and the first item may be obtained.

Attribute information of the user may be an attribute related to a preference feature of the user, and is at least one of gender, age, occupation, income, hobby, and education level. The gender may be male or female, the age may be a number ranging from 0 to 100, the occupation may be teacher, programmer, chef, or the like, the hobby may be basketball, tennis, running, or the like, and the education level may be primary school, middle school, high school, university, or the like. A specific type of the attribute information of the user is not limited in this application.

The item may be a physical item or a virtual item, for example, may be an item like an application (application, app), audio/video, a web page, an advertisement, and news. Attribute information of the item may be at least one of an item name, a developer, an installation package size, a category, and a positive rating. For example, the item is an application, the category of the item may be a chat category, a running game, an office category, or the like, and the positive rating may be a score and a comment made on the item, or the like. A specific type of the attribute information of the item is not limited in this application.

In a possible implementation, at least one calibration feature may be further obtained, where the calibration feature is a feature that affects a recommendation score. For example, the calibration feature may be an ID of an item, a recommended layout, an ID of an item provider (for example, an advertiser), a recommendation platform, a recommendation scenario, or the like. The recommendation scenario may be related to a context (for example, information such as time and a region). Different calibration features cause different data distribution, thereby affecting the recommendation score and a recommendation result.

A task implemented by a recommendation model in embodiments of this application may be, but is not limited to, a plurality of the following tasks: purchase behavior prediction, add-to-cart behavior prediction, sharing behavior prediction, browsing behavior prediction, completion rate prediction, like prediction, favorites prediction, click-through rate prediction, and click conversion prediction.

502: Obtain a calibration coefficient corresponding to each calibration feature.

In a possible implementation, a corresponding calibration coefficient may be preset for each of a plurality of calibration features. When a recommendation score is calculated (for example, the recommendation score of recommending the first item to the first user is calculated), a calibration feature related to the calculation may be obtained. For example, an ID of the first item, an ID of a provider of the first item, a current recommendation layout, and a current recommendation platform may be selected as the calibration feature. The calibration coefficient corresponding to each calibration feature may be obtained. The calibration coefficient may indicate a recommendation score and an actual score (for example, an actual interaction score like an actual click-through rate of the user with the item) that are obtained by the recommendation model by processing recommendation data (for example, including the attribute information of the user and the item and context information) related to the calibration feature. In this way, the calibration coefficient may be used to adjust a recommendation score output by the recommendation model subsequently, to obtain accurate recommendation scores that adapt to different calibration features.

The following describes how to configure a value of the calibration coefficient corresponding to each calibration feature.

In a possible implementation, when a calibration coefficient corresponding to a calibration feature is calculated, a recommendation sample related to the calibration feature may be obtained. The recommendation sample may include a recommendation score that is of recommending an item to the user and that is obtained by the recommendation model when the recommendation model processes recommendation data that meets the calibration feature, and an actual interaction score of the user with the item.

For example, a target calibration feature is used as an example. A second recommendation score of recommending the second item to the second user and an actual interaction score of the second user with the second item may be obtained. The second recommendation score is obtained by using the recommendation model, the second attribute information corresponds to the target calibration feature, and the target calibration feature is one of the at least one calibration feature.

The calibration coefficient may represent a deviation between model output and the actual interaction score. Therefore, in embodiments of this application, a first deviation degree between the actual interaction score and the second recommendation score may be calculated by using a calculation method of a confidence interval for binomial distribution, where a calibration coefficient corresponding to the target calibration feature is generated based on the first deviation degree.

The confidence interval may be, but is not limited to, a Wilson interval.

Click-through rate prediction is used as an example. The actual interaction score may be an average click-through rate. For each calibration feature dimension (or may be referred to as a feature dimension), a confidence is calculated by using a Wilson interval formula. According to a quantity n of samples, an average score *p̂* of the recommendation model corresponding to the calibration feature is calculated, and an observed actual average click-through rate p can be substituted into the following formula to calculate a deviation degree z (namely, the first deviation degree in embodiments of this application) between a model estimation result and an actual observation result: $\hat{p} \approx \frac{1}{1 + \frac{{z}^{2}}{n}} \left(p+\frac{{z}^{2}}{2 n}\right) \pm \frac{z}{1 + \frac{{z}^{2}}{n}} \sqrt{\frac{p \left(1-p\right)}{n} + \frac{{z}^{2}}{4 {n}^{2}}}$

A value of z may be solved by using a method like a dichotomy method or a Newton iteration method.

In a possible implementation, the first deviation degree may be mapped by using a target mapping method, to obtain a second deviation degree, where the target mapping method is a monotonically increasing function; a third recommendation score obtained after the actual interaction score is deviated by the second deviation degree is calculated by using the calculation method of the confidence interval for binomial distribution; and the calibration coefficient corresponding to the target calibration feature is obtained based on a difference between the third recommendation score and the second recommendation score. The target mapping method may be further used to reduce a value of the input data, to be specific, the second deviation degree is less than the first deviation degree.

For example, the calculated z may be transformed by using the following monotonic transformation function: $z ′ = \frac{4}{1 + {e}^{- \frac{z}{2}}} - 2$

A new deviation degree z' (namely, the second deviation degree in embodiments of this application) obtained through transformation is further substituted into the first formula, and a calibrated average model score *p̂*ᵢ (i indicates an i^{th} calibration feature) can be obtained based on the quantity n of samples and the observed actual average click-through rate p. If p > p, the positive or negative sign in the formula is a positive value. Otherwise, the positive or negative sign is a negative value.

In a possible implementation, a ratio of the third recommendation score to the second recommendation score may be used as the calibration coefficient corresponding to the target calibration feature. That is, the calibration coefficient k*ᵢ* corresponding to the calibration feature is calculated. A corresponding calibration coefficient is a ratio of average model scores before and after calibration, that is, k*ᵢ*=*p̂*ᵢ/*p̂*.

It should be understood that, in addition to the Wilson interval, the calculation method of the confidence interval for binomial distribution in embodiments of this application may be extended to use another calculation method. For a transformation function of a deviation degree, another monotonically increasing bounded function may also be used.

In embodiments of this application, a confidence of a positive sample proportion (namely, a calibration coefficient) is calculated by using the confidence interval for binomial distribution, and the model is calibrated with different strength based on the confidence. Even if a confidence of accumulated data in a short time window is used, good calibration effect can be achieved.

503: Obtain, based on the first attribute information by using the recommendation model, a first recommendation score of recommending the first item to the first user.

In a possible implementation, the first attribute information may be processed by using the recommendation model, to obtain the first recommendation score of recommending the first item to the first user.

504: Adjust the first recommendation score based on the calibration coefficient.

In a possible implementation, after the calibration coefficient is obtained, the first recommendation score may be adjusted based on the calibration coefficient.

In a possible implementation, after a plurality of calibration coefficients are obtained, the plurality of calibration coefficients corresponding to the plurality of calibration features may be fused to obtain a fused calibration coefficient; and the first recommendation score is adjusted based on the fused calibration coefficient.

It should be understood that a fusion method in embodiments of this application may be performed based on a geometric average value, or another average value calculation manner may be used. This is not limited in this application.

For example, calibration coefficients corresponding to different calibration features are aggregated according to the following formula: $\hat{k} = {\left({\prod }_{i = 1}^{K} {{k}_{i}}^{{w}_{i}}\right)}^{\frac{1}{{\sum }_{i = 1}^{K} {w}_{i}}}$

Herein, *wᵢ* represents a geometric average value weight (which is 1 by default, or may be manually set or determined in a parameter search manner) of each calibration feature. For a specific sample, it is assumed that a score of the sample by the model is y, and a calibrated score of the sample is y' = y*k̂*.

In embodiments of this application, corresponding calibration coefficients are set for different calibration dimensions, and output of a model is adjusted by using a calibration coefficient of a calibration dimension related to currently to-be-recommended data, so that recommendation effect and precision of the model can be improved.

In addition, a confidence of a positive sample proportion (namely, a calibration coefficient) is calculated by using the confidence interval for binomial distribution, and the model is calibrated with different strength based on the confidence. Even if a confidence of accumulated data in a short time window is used, good calibration effect can be achieved.

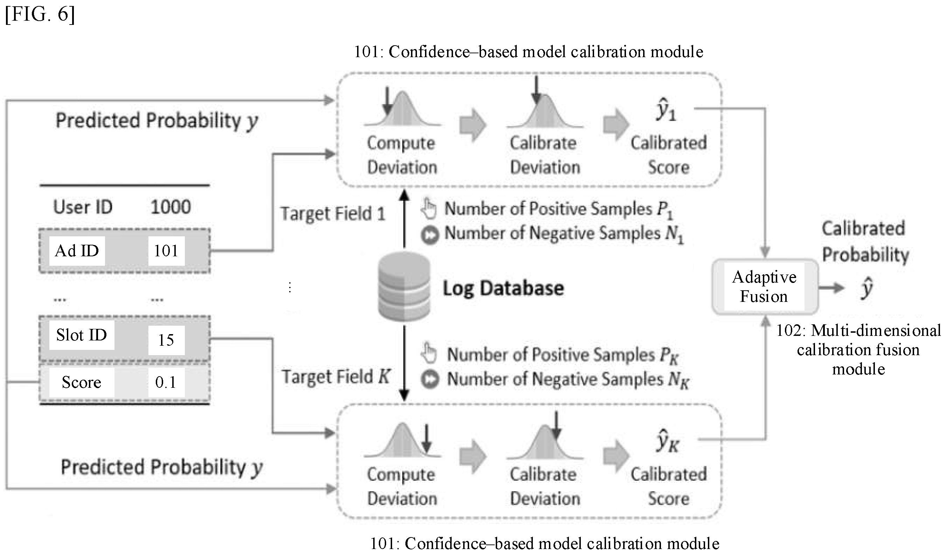

The following describes a diagram of an application framework according to an embodiment of this application with reference to FIG. 6. The application framework includes:
a confidence-based model calibration module 101 and a multi-dimensional calibration fusion module 102.

In the framework shown in FIG. 6, the confidence-based model calibration module 101 considers sample collection and calculates a confidence of a positive sample proportion by using a Wilson confidence interval for binomial distribution, and maps a deviation degree between an actual observation value and model-estimated distribution based on a mapping function, to calibrate the model with different strength.

The multi-dimensional calibration fusion module 102 independently calculates multi-dimensional calibration scores for a sample, and fuses the calibrated scores in a weighted geometric average manner. The multi-dimensional calibration fusion module 102 is a configurable module.

The following describes beneficial effect of this embodiment of this application based on experiments.

Experimental evaluation indicators are overall deviation between an estimated score and an actual statistical value and deviation in each feature dimension. Experiment is performed on a dataset, and results are shown in Table 1.

**Table 1 Experiment result statistics**

| Method/Calibration dimension | Overall | Publisher id | Slot id | Industrial id |
|---|---|---|---|---|
| Base | 20.23% | 20.38% | 50.89% | 68.02% |
| Rescale | 8.89% | 7.93% | 50.14% | 50.65% |
| HistBin | 9.42% | 8.86% | 51.65% | 54.33% |
| IsoReg | 8.84% | 7.99% | 50.68% | 52.43% |
| SIR | 9.46% | 8.85% | 54.39% | 53.51% |
| NeuCalib | 8.52% | 7.80% | 48.95% | 47.92% |
| ConfCalib | 8.07% | 7.41% | 44.05% | 42.45% |

It can be seen from Table 1 that, compared with the baseline, this embodiment of this application can obtain a better result, and the deviation of the model score can be consistently reduced in each dimension.

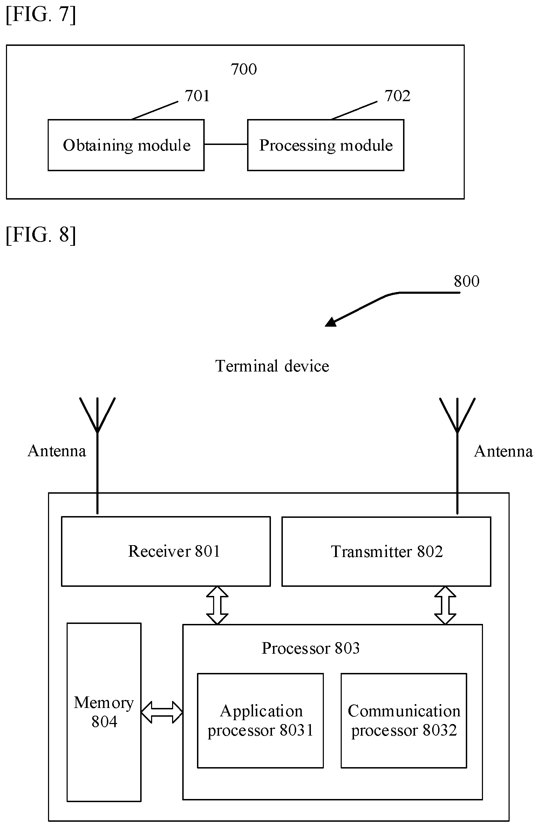

The following describes, from a perspective of an apparatus, a data processing apparatus provided in an embodiment of this application. FIG. 7 is a diagram of a structure of a data processing apparatus according to an embodiment of this application. As shown in FIG. 7, the data processing apparatus 700 provided in this embodiment of this application includes the following modules.

An obtaining module 701 is configured to: obtain first attribute information of a first user and a first item and at least one calibration feature, where the calibration feature indicates at least one of a recommendation scenario, an item, or an item provider; and obtain a calibration coefficient corresponding to each calibration feature.

For specific descriptions of the obtaining module 701, refer to the descriptions of steps 501 and 502 in the foregoing embodiment. Details are not described herein again.

A processing module 702 is configured to: obtain, based on the first attribute information by using a recommendation model, a first recommendation score of recommending the first item to the first user; and adjust the first recommendation score based on the calibration coefficient.

For specific descriptions of the processing module 702, refer to the descriptions of steps 503 and 504 in the foregoing embodiment. Details are not described herein again.

In a possible implementation, the obtaining module 701 is further configured to:
obtain a second recommendation score of recommending the second item to the second user and an actual interaction score of the second user with the second item, where the second recommendation score is obtained by using the recommendation model, the second attribute information corresponds to a target calibration feature, and the target calibration feature is one of the at least one calibration feature; and
the processing module 702 is further configured to:
calculate a first deviation degree between the actual interaction score and the second recommendation score by using a calculation method of a confidence interval for binomial distribution, where a calibration coefficient corresponding to the target calibration feature is generated based on the first deviation degree.

In a possible implementation, the processing module 702 is further configured to:
map the first deviation degree by using a target mapping apparatus, to obtain a second deviation degree, where the target mapping apparatus is a monotonically increasing function;
calculate, by using the calculation apparatus of the confidence interval for binomial distribution, a third recommendation score obtained after the actual interaction score is deviated by the second deviation degree; and
obtain, based on a difference between the third recommendation score and the second recommendation score, the calibration coefficient corresponding to the target calibration feature.

In a possible implementation, the processing module 702 is specifically configured to:
use a ratio of the third recommendation score to the second recommendation score as the calibration coefficient corresponding to the target calibration feature.

In a possible implementation, the confidence interval is a Wilson interval.

In a possible implementation, the processing module 702 is specifically configured to:
fuse a plurality of calibration coefficients corresponding to the plurality of calibration features, to obtain a fused calibration coefficient; and
adjust the first recommendation score based on the fused calibration coefficient.

The following describes a terminal device provided in an embodiment of this application. FIG. 8 is a diagram of a structure of a terminal device according to an embodiment of this application. The terminal device 800 may be specifically a mobile phone, a tablet computer, a notebook computer, an intelligent wearable device, or the like. This is not limited herein. The terminal device 800 may be used as a training device to implement a function of the data processing method in the embodiment corresponding to FIG. 5, or may be used as an execution device to execute the trained model obtained based on the data processing method in the embodiment corresponding to FIG. 5. Specifically, the terminal device 800 includes a receiver 801, a transmitter 802, a processor 803 (there may be one or more processors 803 in the terminal device 800), and a memory 804. The processor 803 may include an application processor 8031 and a communication processor 8032. In some embodiments of this application, the receiver 801, the transmitter 802, the processor 803, and the memory 804 may be connected by using a bus or in another manner.

The memory 804 may include a read-only memory and a random access memory, and provide instructions and data to the processor 803. A part of the memory 804 may further include a non-volatile random access memory (non-volatile random access memory, NVRAM). The memory 804 stores a processor and operation instructions, executable modules or data structures, or a subset thereof, or an extended set thereof, where operation instructions may include various operation instructions used to implement various operations.

The processor 803 controls an operation of the execution device. During specific application, components of the execution device are coupled together through a bus system. In addition to a data bus, the bus system may include a power bus, a control bus, a status signal bus, and the like. However, for clear description, various types of buses in the figure are marked as the bus system.

The method disclosed in the foregoing embodiments of this application may be applied to the processor 803, or implemented by the processor 803. The processor 803 may be an integrated circuit chip and has a signal processing capability. In an implementation process, the steps in the foregoing method may be implemented by using a hardware integrated logic circuit in the processor 803, or by using instructions in a form of software. The processor 803 may be a general-purpose processor, a digital signal processor (digital signal processor, DSP), a microprocessor or microcontroller, a vision processing unit (vision processing unit, VPU), a tensor processing unit (tensor processing unit, TPU), and another processor suitable for AI computing, and may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 803 may implement or perform methods, steps, and logical block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 804, and the processor 803 reads information in the memory 804 and completes steps 501 to 504 in the foregoing embodiment in combination with hardware of the processor.

The receiver 801 may be configured to: receive input digital or character information, and generate signal input related to a related setting and function control of the execution device. The transmitter 802 may be configured to output the digital or character information through a first interface. The transmitter 802 may be further configured to send instructions to a disk group through the first interface, to modify data in the disk group. The transmitter 802 may further include a display device like a display.

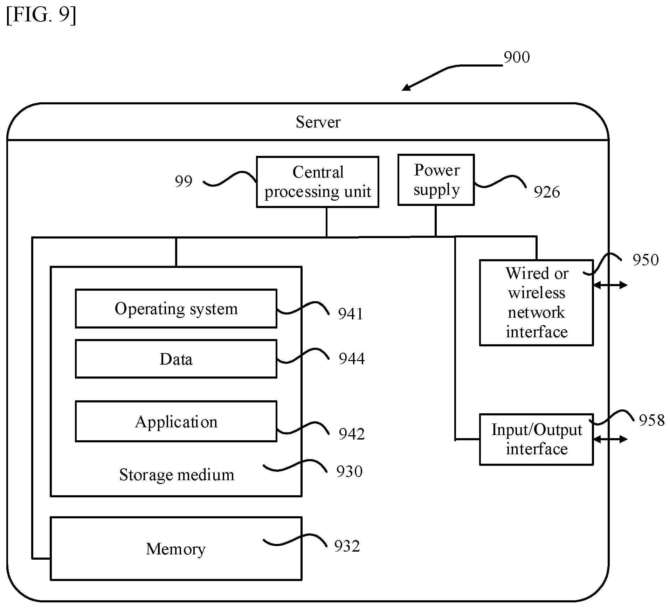

An embodiment of this application further provides a server. FIG. 9 is a diagram of a structure of a server according to an embodiment of this application. Specifically, the server 900 is implemented by one or more servers. The server 900 may vary greatly due to different configurations or performance, and may include one or more central processing units (central processing units, CPUs) 99 (for example, one or more processors) and a memory 932, and one or more storage media 930 (for example, one or more mass storage devices) that stores an application 942 or data 944. The memory 932 and the storage medium 930 may be transitory storage or persistent storage. A program stored in the storage medium 930 may include one or more modules (not shown in the figure), and each module may include a series of instruction operations for a training device. Further, the central processing unit 99 may be configured to: communicate with the storage medium 930, and execute, on the server 900, the series of instruction operations in the storage medium 930.

The server 900 may further include one or more power supplies 926, one or more wired or wireless network interfaces 950, one or more input/output interfaces 958, or one or more operating systems 941, for example, Windows ServerTM, Mac OS XTM, UnixTM, LinuxTM, and FreeBSDTM.

Specifically, the server may be used as the training device to perform steps 501 to 504 in the foregoing embodiment.

In a possible implementation, the terminal device 800 or the server 900 may be used as the training device to perform steps 501 to 504 in the foregoing embodiment to obtain the trained model, and deploy the trained model on the execution device. The execution device may also be in a form of the terminal device 800 or the server 900. When the execution device executes the trained model, refer to the model feedforward process in the embodiment corresponding to FIG. 5.

An embodiment of this application further provides a computer program product. When the computer program product is run on a computer, the computer is enabled to perform the steps performed by the foregoing execution device, or the computer is enabled to perform the steps performed by the foregoing training device.

An embodiment of this application further provides a computer-readable storage medium. The computer-readable storage medium stores a program used to process a signal, and when the program runs on a computer, the computer is enabled to perform steps performed by the foregoing execution device; or the computer is enabled to perform steps performed by the foregoing training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in the execution device performs the data processing method described in embodiments, or a chip in the training device performs the data processing method described in embodiments. Optionally, the storage unit is a storage unit in the chip, for example, a register or a cache. Alternatively, the storage unit may be a storage unit in a wireless access device but outside the chip, for example, a read-only memory (read-only memory, ROM), another type of static storage device that can store static information and instructions, or a random access memory (random access memory, RAM).

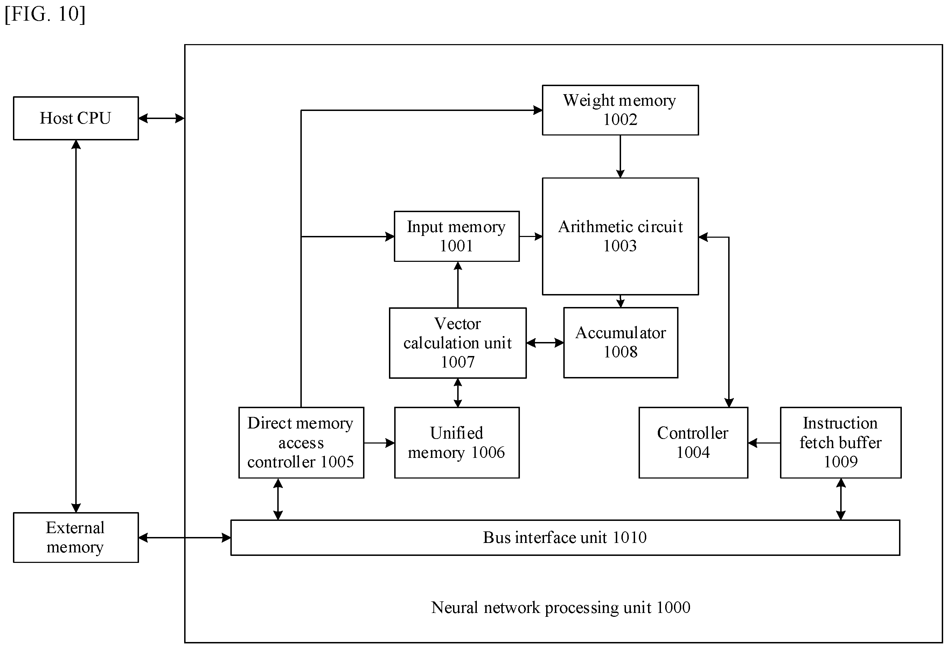

Specifically, FIG. 10 is a diagram of a structure of a chip according to an embodiment of this application. The chip may be represented as a neural network processing unit NPU 1000. The NPU 1000 is mounted to a host CPU (Host CPU) as a coprocessor, and the host CPU allocates a task. A core part of the NPU is an arithmetic circuit 1003. A controller 1004 controls the arithmetic circuit 1003 to extract matrix data in a memory and perform a multiplication operation.

The NPU 1000 may implement, through cooperation between internal components, the data processing method provided in the embodiment described in FIG. 5.

More specifically, in some implementations, the arithmetic circuit 1003 in the NPU 1000 includes a plurality of process engines (Process Engines, PEs) inside. In some implementations, the arithmetic circuit 1003 is a two-dimensional systolic array. The arithmetic circuit 1003 may alternatively be a one-dimensional systolic array or another electronic circuit capable of performing mathematical operations such as multiplication and addition. In some implementations, the arithmetic circuit 1003 is a general-purpose matrix processor.

For example, it is assumed that there is an input matrix A, a weight matrix B, and an output matrix C. The arithmetic circuit fetches corresponding data of the matrix B from a weight memory 1002, and buffers the data on each PE in the arithmetic circuit. The arithmetic circuit obtains data of the matrix A from an input memory 1001 to perform a matrix operation on the matrix B, and stores an obtained partial result or an obtained final result of the matrix into an accumulator (accumulator) 1008.

A unified memory 1006 is configured to store input data and output data. Weight data is directly transferred to the weight memory 1002 by using a direct memory access controller (Direct Memory Access Controller, DMAC) 1005. The input data is also moved to the unified memory 1006 by using the DMAC.

A BIU, Bus Interface Unit, that is, a bus interface unit 1010, is configured for interaction between an AXI bus and the DMAC and interaction between the AXI bus and an instruction fetch buffer (Instruction Fetch Buffer, IFB) 1009.

The bus interface unit (Bus Interface Unit, BIU for short) 1010 is used by the instruction fetch buffer 1009 to obtain instructions from an external memory, and further used by the direct memory access controller 1005 to obtain original data of the input matrix A or the weight matrix B from the external memory.

The DMAC is mainly configured to transfer input data in the external memory DDR to the unified memory 1006, transfer weight data to the weight memory 1002, or transfer input data to the input memory 1001.

A vector calculation unit 1007 includes a plurality of operation processing units. If needed, further processing, for example, vector multiplication, vector addition, an exponential operation, a logarithm operation, or size comparison, is performed on an output of the arithmetic circuit 1003. The vector calculation unit 1007 is mainly used for nonconvolutional/fully connected layer network calculation in a neural network, such as Batch Normalization (batch normalization), pixel-level summation, and upsampling of a feature map.

In some implementations, the vector calculation unit 1007 can store a processed and output vector in the unified memory 1006. For example, the vector calculation unit 1007 may apply a linear function or a nonlinear function to the output of the arithmetic circuit 1003, for example, perform linear interpolation on a feature plane extracted at a convolutional layer. For another example, the linear function or the nonlinear function is applied to a vector of an accumulated value to generate an activation value. In some implementations, the vector calculation unit 1007 generates a normalized value, a pixel-level summation value, or both a normalized value and a pixel-level summation value. In some implementations, the processed and output vector can be used as activation input to the arithmetic circuit 1003, for example, for use in subsequent layers in the neural network.

The instruction fetch buffer (instruction fetch buffer) 1009 connected to the controller 1004 is configured to store instructions used by the controller 1004.

The unified memory 1006, the input memory 1001, the weight memory 1002, and the instruction fetch buffer 1009 are all on-chip memories. The external memory is private to a hardware architecture of the NPU.

Any one of the processors mentioned above may be a general-purpose central processing unit, a microprocessor, an ASIC, or one or more integrated circuits for controlling program execution.

In addition, it should be noted that the described apparatus embodiments are merely examples. The units described as separate components may or may not be physically separate, and components displayed as units may or may not be physical units, in other words, may be located in one position, or may be distributed on a plurality of network units. A part or all of the modules may be selected based on actual requirements to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, for this application, a software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or a part of the foregoing embodiments may be implemented by software, hardware, firmware, or any combination thereof. When software is used to implement the foregoing embodiments, all or a part of the foregoing embodiments may be implemented in a form of a computer program product.

The computer program product includes one or more computer instructions. When the computer program instructions are loaded and executed on a computer, procedures or functions according to embodiments of this application are all or partially generated. The computer may be a general-purpose computer, a dedicated computer, a computer network, or any other programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

## Claims

1. A data processing method, wherein the method comprises:
obtaining first attribute information of a first user and a first item and at least one calibration feature, wherein the calibration feature indicates at least one of a recommendation scenario, an item, or an item provider;
obtaining a calibration coefficient corresponding to each calibration feature;
obtaining, based on the first attribute information by using a recommendation model, a first recommendation score of recommending the first item to the first user; and
adjusting the first recommendation score based on the calibration coefficient.

2. The method according to claim 1, wherein the method further comprises:
obtaining a second recommendation score of recommending a second item to the second user and an actual interaction score of the second user with the second item, wherein the second recommendation score is obtained by using the recommendation model, second attribute information corresponds to a target calibration feature, and the target target calibration feature feature is one of the at least one calibration feature; and
calculating a first deviation degree between the actual interaction score and the second recommendation score by using a calculation method of a confidence interval for binomial distribution, wherein a calibration coefficient corresponding to the target calibration feature is generated based on the first deviation degree.

3. The method according to claim 2, wherein the method further comprises:
mapping the first deviation degree by using a target mapping method, to obtain a second deviation degree, wherein the target mapping method is a monotonically increasing function;
calculating, by using the calculation method of the confidence interval for binomial distribution, a third recommendation score obtained after the actual interaction score is deviated by the second deviation degree; and
obtaining, based on a difference between the third recommendation score and the second recommendation score, the calibration coefficient corresponding to the target calibration feature.

4. The method according to claim 2 or 3, wherein obtaining, based on the difference between the third recommendation score and the second recommendation score, the calibration coefficient corresponding to the target calibration feature comprises:
using a ratio of the third recommendation score to the second recommendation score as the calibration coefficient corresponding to the target calibration feature.

5. The method according to any one of claims 2 to 4, wherein the confidence interval is a Wilson interval.

6. The method according to any one of claims 1 to 5, wherein the first attribute information corresponds to a plurality of calibration features, and adjusting the first recommendation score based on the calibration coefficient comprises:
fusing a plurality of calibration coefficients corresponding to the plurality of calibration features, to obtain a fused calibration coefficient; and
adjusting the first recommendation score based on the fused calibration coefficient.

7. A data processing apparatus, wherein the apparatus comprises:
an obtaining module, configured to: obtain first attribute information of a first user and a first item and at least one calibration feature, wherein the calibration feature indicates at least one of a recommendation scenario, an item, or an item provider; and obtain a calibration coefficient corresponding to each calibration feature; and
a processing module, configured to: obtain, based on the first attribute information by using a recommendation model, a first recommendation score of recommending the first item to the first user; and adjust the first recommendation score based on the calibration coefficient.

8. The apparatus according to claim 7, wherein the obtaining module is further configured to:
obtain a second recommendation score of recommending the second item to a second user and an actual interaction score of the second user with the second item, wherein the second recommendation score is obtained by using the recommendation model, the second attribute information corresponds to a target calibration feature, and the target calibration feature is one of the at least one calibration feature; and
the processing module is further configured to:
calculate a first deviation degree between the actual interaction score and the second recommendation score by using a calculation apparatus of a confidence interval for binomial distribution, wherein a calibration coefficient corresponding to the target calibration feature is generated based on the first deviation degree.

9. The apparatus according to claim 8, wherein the processing module is further configured to:
map the first deviation degree by using a target mapping apparatus, to obtain a second deviation degree, wherein the target mapping apparatus is a monotonically increasing function;
calculate, by using the calculation method of the confidence interval for binomial distribution, a third recommendation score obtained after the actual interaction score is deviated by the second deviation degree; and
obtain, based on a difference between the third recommendation score and the second recommendation score, the calibration coefficient corresponding to the target calibration feature.

10. The apparatus according to claim 8 or 9, wherein the processing module is specifically configured to:
use a ratio of the third recommendation score to the second recommendation score as the calibration coefficient corresponding to the target calibration feature.

11. The apparatus according to any one of claims 8 to 10, wherein the confidence interval is a Wilson interval.

12. The apparatus according to any one of claims 7 to 11, wherein the processing module is specifically configured to:
fuse a plurality of calibration coefficients corresponding to the plurality of calibration features, to obtain a fused calibration coefficient; and
adjust the first recommendation score based on the fused calibration coefficient.

13. A compute device, wherein the compute device comprises a memory and a processor, the memory stores code, and the processor is configured to obtain the code and perform the method according to any one of claims 1 to 6.

14. A computer storage medium, wherein the computer storage medium stores one or more instructions, and when the one or more instructions are executed by one or more computers, the one or more computers are enabled to perform the method according to any one of claims 1 to 6.

15. A computer program product, comprising code, wherein when the code is executed, the method according to any one of claims 1 to 6 is implemented.

16. A chip, comprising a processor, wherein the processor is configured to support a data processing apparatus in implementing the method according to any one of claims 1 to 6.
